# EUROPEAN PATENT SPECIFICATION

(11) **EP 0 473 792 B1**
(45) Date of publication and mention of the grant of the patent: **05.06.1996**
(21) Application number: 91905523.6
(22) Date of filing: 11.03.1991
(51) Int. Cl.: C08G 65/32, C08L 71/02

(54) **CURABLE COMPOSITION**
Hartbare zusammensetzung
COMPOSITION POLYMERISABLE

(30) Priority: 09.03.1990 JP 58856/90
(43) Date of publication of application: 11.03.1992
(73) Proprietor: Kanegafuchi Chemical Industry Co., Ltd., Kita-ku Osaka 530 (JP)
(72) Inventor: FUJITA, Masayuki, 2-63, Okihama-machi, Hyogo 676 (JP); HOMMA, Michihide, 2-63, Okihama-machi, Hyogo 676 (JP); WAKABAYASHI, Hiroshi, 8-B-102, Maikodai 2-chome, Kobe-shi, Hyogo 655 (JP)
(74) Representative: Strehl Schübel-Hopf Groening & Partner
(86) International application number: JP9100325
(87) International publication number: WO9113927

(56) References cited:
- EP-A- 0 342 411
- EP-A- 0 397 036
- JP-A-61 141 761
- JP-A-61 197 631
- JP-A-61 215 623
- JP-B- 6 118 582
- PATENT ABSTRACTS OF JAPAN vol. 6, no. 261 (C-141)(1139) 21 December 1982
- CHEMICAL ABSTRACTS, vol. 85, no. 2, 12 July 1976, Columbus, Ohio, US; abstract no. 7037F, ISAYAMA, KATSUHIKO ET AL: 'Oxyalkylene Polymers Containing Silicon Atoms At Chain Ends.' page 78 ;

## Description

### TECHNICAL FIELD

This invention relates to a novel curable composition which comprises a reactive silicon group-containing oxypropylene polymer and a reaction product derived from an organotin and an ester compound.

### BACKGROUND ART

A room temperature curable composition is known which comprises a reactive silicon group (a group which is a silicon atom-containing group with a hydroxyl group or a hydrolyzable group being bound to the silicon atom and can form a siloxane bond) and a reaction product derived from an organotin and an ester compound (Japanese Kokai Patent Publication No. 57-155250).

Recently, it has been reported that oxypropylene polymers with a narrow molecular weight distribution can be obtained. The present inventors found that when a reaction product derived from an organotin and an ester compound are added to a polymer derived from an oxypropylene polymer having a narrow molecular weight distribution, which is used as the main chain, by introduction of a reactive silicon group, the rate of curing is markedly improved as compared with the case in which an oxypropylene polymer showing a broad molecualr weight distribution. This finding has now led to the present invention.

### DISCLOSURE OF INVENTION

The curable composition according to the invention comprises:
(A) 100 parts by weight (hereinafter, "parts" for short) of an oxypropylene polymer which contains, in its main polymer chain, a repeating unit of the formula 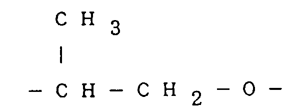 and which has at least one silicon atom-containing group with a hydroxyl group or a hydrolyzable group being bound to the silicon atom and has an Mw/Mn ratio of not more than 1.6 and a number average molecular weight of not less than 6,000, and
(B) 0.01 to 10 parts of a reaction product derived from an organotin of the formula

   R⁵R⁶SnO

   wherein R⁵ and R⁶ each is a monovalent hydrocarbon group, and an ester compound (hereinafter said reaction product is referred to as "curing catalyst").

### BEST MODE FOR CARRYING OUT THE INVENTION

The "reactive silicon group" as so termed herein is not limited to any particular species but may typically include, for example, groups of the following general formula (1)

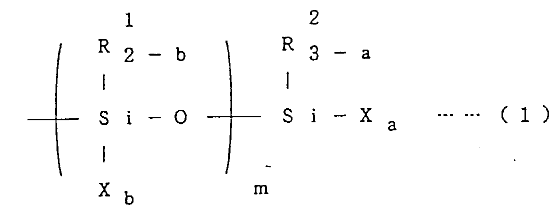

In the above formula, R¹ and R² each is an alkyl group containing 1 to 20 carbon atoms, an aryl group containing 6 to 20 carbon atoms, an aralkyl group containing 7 to 20 carbon atoms or a triorganosiloxy group of the formula (R')₃SiO-. Where there are two or more R¹ or R² groups, they may be the same or different. R' is a monovalent hydrocarbon group containing 1 to 20 carbon atoms. The three R' groups may be the same or different. X is a hydroxyl group or a hydrolyzable group and, where there are two or more X groups, they may be the same or different. a is 0, 1, 2 or 3 and b is 0, 1 or 2. The number b may vary in the m groups of the formula 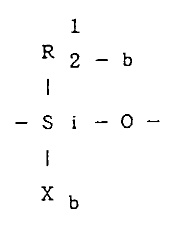 m is an integer of 0 to 19. The following condition shall be satisfied: a + Σb ≧ 1.

The hydrolyzable group represented by the above-mentioned X is not particularly limited but may be any hydrolyzable group known in the art. More specifically, there may be mentioned a hydrogen atom, a halogen atom, an alkoxy group, an acyloxy group, a ketoximato group, an amino group, an amido group, an acid amido group, an aminoxy group, a mercapto group, an alkenyloxy group and the like. Among these, the hydrogen atom and alkoxy, acyloxy, ketoximato, amino, amido, aminoxy, mercapto and alkenyloxy groups are preferred. From the viewpoint of mild hydrolyzability and easy handling, alkoxy groups, for example methoxy, are particularly preferred.

One to three such hydrolyzable groups or hydroxyl groups may be bound to one silicon atom, and (a + Σb) is preferably equal to 1 to 5. Where there are two or more hydrolyzable groups or hydroxyl groups in the reactive silicon group, they may be the same or different.

The reactive silicon group may contain one silicon atom or two or more silicon atoms. In the case of a reactive silicon group comprising silicon atoms linked to one another via a siloxane bonding or the like, said group may contain about 20 silicon atoms.

Reactive silicon groups of the following general formula (2) are preferred because of ready availability. 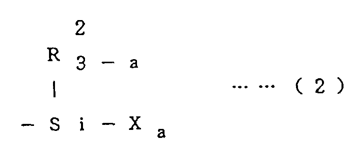 In the above formula, R², X and a are as defined above.

Specific examples of R¹ and R² appearing in the general formula (1) given hereinabove include, among others, alkyl groups, such as methyl and ethyl, cycloalkyl groups, such as cyclohexyl, aryl groups, such as phenyl, aralkyl groups, such as benzyl, and triorganosiloxy groups of the formula (R')₃SiO- in which R' is methyl or phenyl. The methyl group is particularly preferred as R¹, R² and/or R'.

The oxypropylene polymer should recommendably contain at least one, preferably 1.1 to 5 reactive silicon groups per molecule thereof. When the number of reactive silicon groups contained in the polymer on the per-molecule basis is less than 1, the curability becomes inadequate and a good rubber elastic behavior can hardly be developed.

The reactive silicon group may be positioned terminally or internally to the molecular chain of the oxypropylene polymer. When the reactive silicon group occurs terminally to the molecular chain, the oxypropylene polymer component contained in the finally formed cured product can have an increased number of effective network chains and therefore a rubber-like cured product showing high strength, high elongation and low elasticity can readily be obtained.

The oxypropylene polymer, which constitutes the main polymer chain in the polymer to be used in accordance with the invention, contains a repeating unit of the formula 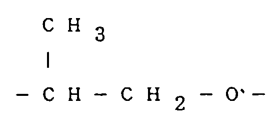 This oxypropylene polymer may be straight-chained or branched, or a mixture of these. It may further contain another monomer unit or the like. It is preferable, however, that the polymer contains the monomer unit represented by the above formula in an amount of at least 50% by weight, more preferably at least 80% by weight.

The oxypropylene polymer that can effectively be used has a number average molecular weight (Mn) of not less than 6,000, preferably 6,000 to 30,000. Furthermore, in this oxypropylene polymer, the weight average molecular weight/number average molecular weight ratio (Mw/Mn) is not more than 1.6, hence the molecular weight distribution is very narrow (the polymer is highly monodisperse). The value of Mw/Mn should preferably be not higher than 1.5, more preferably not higher than 1.4. The molecular weight distribution can be measured by various methods. Generally, however, the measurement method most commonly used is gel permeation chromatography (GPC). Since the molecular weight distribution is narrow in that manner despite the great number average molecular weight, the curable composition of the invention has a low viscosity before curing, hence is easy to handle and, after curing, shows a good rubber elastic behavior.

The reactive silicon group-containing oxypropylene polymer to be used as component (A) in the practice of the invention is preferably prepared by introducing a reactive silicon group into an oxypropylene polymer having a functional group.

Oxypropylene polymers having a high molecular weight with a narrow molecular weight distribution and having a functional group can hardly be obtained by the conventional method of polymerizing oxypropylene (anionic polymerization using a caustic alkali) or by the chain extension reaction method using oxypropylene polymers obtained by said conventional method as starting materials. They can be obtained, however, by such special polymerization methods as those described in Japanese Kokai Patent Publications Nos. 61-197631, 61-215622, 61-215623 and 61-218632 and Japanese Patent Publications Nos. 46-27250 and 59-15336 and elsewhere. Since introduction of a reactive silicon group tends to result in a broadened molecular weight distribution as compared with that before introduction, the molecular weight distribution of the polymer before introduction should preferably be as narrow as possible.

The reactive silicon group introduction can be carried out by any appropriate known method. Thus, for example, the following methods may be mentioned.
(1) An oxypropylene polymer having a terminal functional group, for example a hydroxyl group, is reacted with an organic compound having an active group or unsaturated group reactive with said function group and then the resulting reaction product is hydrosilylated by treatment with a hydrosilane having a hydrolyzable group.
(2) An oxypropylene polymer having a terminal functional group (hereinafter referred to as functional group Y), such as a hydroxyl, epoxy or isocyanato group, is reacted with a compound having a functional group (hereinafter referred to as functional group Y') reactive with said functional group Y and a reactive silicon group.

Typical examples of the silicon compound having the functional group Y' include, but are not limited to, amino group-containing silanes, such as γ-(2-aminoethyl)aminopropyltrimethoxysilane, γ-(2-aminoethyl)aminopropylmethyldimethoxysilane and γ-aminopropyltriethoxysilane; mercapto group-containing silanes, such as γ-mercaptopropyltrimethoxysilane and γ-mercaptopropylmethyldimethoxysilane; epoxysilanes, such as γ-glycidoxypropyltrimethoxysilane and β-(3,4-epoxy cyclohexyl)ethyltrimethoxysilane; vinyl type unsaturated group-containing silanes, such as vinyltriethoxysilane, γ-methacryloyloxypropyltrimethoxysilane and γ-acryloyloxypropylmethyldimethoxysilane; chlorine atom-containing silanes, such as γ-chloropropyltrimethoxysilane; isocyanato-containing silanes, such as γ-isocyanatopropyltriethoxysilane and γ-isocyanatopropylmethyldimethoxysilane; and hydrosilanes, such as methyldimethoxysilane, trimethoxysilane and methyldiethoxysilane.

Among the methods mentioned above, the method (1), and the method (2) comprising the reaction between a polymer having a terminal hydroxyl group and a compound having an isocyanato group and a reactive silicon group are preferred.

The organotin to be used in the practice of the invention is represented by the formula R⁵R⁶SnO (in which R⁵ and R⁶ each is a monovalent hydrocarbon group). The above-mentioned monovalent hydrocarbon groups R⁵ and R⁶ may contain 1 to about 20 carbon atoms and include, among others, methyl, ethyl, propyl, butyl, amyl, dodecyl, lauryl, propenyl, phenyl and tolyl.

As the ester compound to be reacted with said organotin, there may be mentioned dimethyl maleate, dimethyl phthalate, monoethyl phthalate, dipropyl phthalate, dibutyl maleate, dioctyl phthalate, dilauryl phthalate, dilauryl maleate, ethyl orthosilicate, n-propyl silicate, di-n-propyl sulfate, tributyl phosphate, n-octyl nitrate, amyl borate, methyl acetate, ethyl benzoate, phenyl salicylate, and so forth.

The method of preparing the curing catalyst, which is the component (B), by reacting the organotin with the ester compound may be any known one. One example is briefly mentioned below. The organotin and ester compound are charged, in an appropriate quantity ratio, into a vessel equipped with a stirrer and the resulting mixture is heated with stirring, whereby the reaction progresses smoothly. The end point is the time point when the mixture of both reactants turns into a transparent liquid having a pale yellow color. The mixing ratio between the organotin and ester compound is not particularly limited. Preferably, however, each mole of the organotin should be reacted with 0.25 to 3 moles of the ester compound. When the amount of the latter is below 0.25 mole, there is a strong tendency toward solidification during reaction, so that it is not easy to disperse the reaction product as the catalyst uniformly in the composition. In excess of 3 moles, the catalystic activity of the reaction product itself decreases. The reaction can be conducted at a temperature arbitrarily selected within the range of room temperature to 250°C. More favorable results are obtained when the reaction is carried out at a temperature of 100° to 180°C.

That the pale yellow and transparent liquid obtained by the procedure mentioned above is not a simple solution of the organotin in the ester compound is evidenced by the following facts. Thus, for instance, while dibutyltin oxide is soluble in chlorinated solvents (tetrachloroethylene, etc.) and insoluble in organic solvents such as hydrocarbons, ethers and ketones, the reaction product from dibutyltin oxide and an equimolar amount of dioctyl phthalate is readily soluble in the organic solvent mentioned above.

The curing catalyst, namely component (B), is used in an amount of 0.01 to 10 parts, preferably 0.1 to 5 parts, per 100 parts of the reactive silicon group-containing oxypropylene polymer, namely component (A).

The curable composition of the invention which comprises the above mentioned components (A) and (B) shows a markedly increased rate of curing and, when it is allowed to stand in an ambient atmosphere at room temperature, curing proceeds from the surface in several minutes to 1 hour and the composition becomes tack-free. Several days of tough and firm rubber-like elastic material. Furthermore, this cured composition has good heat resistance and acid resistance.

The reactive silicon group-containing oxypropylene polymer can be modified by incorporating various fillers. Examples of the filler include reinforcing fillers such as fumed silica, precipitated silica, silicic anhydride, hydrous silicic acid and carbon black; fillers such as calcium carbonate, magnesium carbonate, diatomaceous earth, calcined clay, clay, talc, titanium oxide, bentonite, organic bentonite, ferric oxide, zinc oxide, active zinc white, hydrogenated castor oil and "shirasu" balloons; and fibrous fillers such as asbestos, glass fibers and filaments.

For obtaining cured compositions affording high strength using such fillers, a filler selected from among fumed silica, precipitated silica, anhydrous silicic acid, hydrous silicic acid, carbon black, surface-treated finely divided calcium carbonate, calcined clay, clay, active zinc white and the like is used in the main in an amount within the range of 1 to 100 parts per 100 parts of the reactive silicon group-containing oxypropylene polymer to give favorable results. For obtaining cured compositions affording low strength and high elongation, a filler selected from among titanium oxide, calcium carbonate, magnesium carbonate, talc, ferric oxide, zinc oxide, "Shirasu" balloons and the like is used in the main in an amount within the range of 5 to 200 parts per 100 parts of the reactive silicon group-containing oxypropylene polymer to give favorable results. Of course, these fillers may be used either alone or in combination as a mixture of two or more of them.

The curable composition of the invention is more effective since the elongation of the cured product can be increased by combined use of a plasticizer and a filler or a large amount of filler can be incorporated therein. Usable as the plasticizer are phthalate esters, such as dioctyl phthalate, dibutyl phthalate and butyl benzyl phathalate; aliphatic dibasic acid esters, such as dioctyl adipate, isodecyl succinate and dibutyl sebacate; glycol esters, such as diethylene glycol dibenzoate and pentaerythritol esters; aliphatic esters, such as butyl oleate and methyl acetylricinoleate; phosphate esters, such as tricresyl phosphate, trioctyl phosphate and octyl diphenyl phosphate; epoxy plasticizers, such as epoxidized soybean oil, epoxidized linseed oil, benzyl epoxystearate; polyester plasticizers, such as polyesters from a dibasic acid and a dihydric alcohol; polyethers, such as polypropylene glycol and derivatives thereof; polystyrenes, such as poly-α-methylstyrene and polystyrene; polybutadiene, butadiene-acrylonitrile copolymer, polychloroprene, polyisoprene, polybutene, chlorinated paraffin, and so on. These may be used either singly or in the form of an appropriate mixture of two or more of them. When the plasticiser is used in an amount within the range of 0 to 100 parts per 100 parts of the reactive silicon group-containing oxypropylene polymer, favorable results are obtained.

The method of preparing the curable composition of the invention is not particularly limited but any conventional method can be employed: for example, the components mentioned above are combined and kneaded up in a mixer, roll or kneader at ambient temperature or under heating, or the components are dissolved in a small amount of an appropriate solvent for attaining admixing. Furthermore, it is also possible to prepare one-can or two-can formulas by appropriately combining those components.

The curable composition according to the invention, when exposed to air, hence to moisture, three-dimensionally forms a network and hardens to a solid having rubber-like elasticity.

In using the curable composition of the invention, various additives, such as other curing catalysts (e.g. laurylamine, lead octanoate), adhesion improvers, physical property modifiers, storage stability improvers, ultraviolet absorbers, metal inactivators, antiozonants, light stabilizers, amine type radical chain inhibitors, phosphorus-containing peroxide decomposing agents, lubricants, pigments, blowing agents, etc., may be added to said composition as necessary each in an appropriate amount.

The following examples further illustrate the invention.

### Synthesis Example 1

A 1.5-liter pressure-resistant glass reaction vessel was charged with 401 g (0.081 equivalent) of polyoxypropylene triol having a molecular weight of 15,000 (Mw/Mn = 1.38, viscosity = 89 poises) and the contents were placed in a nitrogen atmosphere.

At 137°C, 19.1 g (0.099 equivalent) of a 28% solution of sodium methoxide in methanol was added dropwise from a dropping funnel, then the reaction was conducted for 5 hours and thereafter the reaction mixture was placed under reduced pressure for volatile matter removal. Again in a nitrogen atmosphere, 9.0 g (0.118 equivalent) of allyl chloride was added dropwise, the reaction was conducted for 1.5 hours and then the allylation was further carried out using 5.6 g (0.029 equivalent) of a 28% solution of sodium methoxide in methanol and 2.7 g (0.035 equivalent) of allyl chloride.

The reaction product was dissolved in hexane and subjected to adsorption treatment with aluminum silicate. The subsequent removal of the hexane under reduced pressure gave 311 g of a yellow and transparent polymer (viscosity = 68 poises).

A pressure-resistant glass reaction vessel was charged with 270 g (0.065 equivalent) of this polymer and the contents were placed in a nitrogen atmosphere. A chloroplatinic acid catalyst solution (prepared by dissolving 25 g of H₂PtCl₆·6H₂O in 500 g of isopropyl alcohol; 0.075 ml) was added and the mixture was stirred for 30 minutes. Dimethoxymethylsilane (6.24 g, 0.059 equivalent) was added from a dropping funnel and the reaction was conducted at 90°C for 4 hours. The subsequent volatile matter removal gave 260 g of a yellow and transparent polymer.

### Synthesis Example 2

A flask equipped with a stirrer was charged with 220 g (0.0447 equivalent) of polyoxypropylene triol having a number average molecular weight of 15,000 (Mw/Mn = 1.38, viscosity = 89 poises) and 0.02 g of dibutyltin dilaurate and, in a nitrogen atmosphere, 8.45 g (0.0447 equivalent) of γ-isocyanatopropylmethyldimethoxysilane was added dropwise at room temperature. After completion of the dropping, the reaction was conducted at 75°C for 1.5 hours. IR spectrum measurement was performed and, after confirmation of the disappearance of the NCO absorption at about 2280 cm⁻¹ and of the formation of a C=O absorption at about 1730 cm⁻¹, the reaction was discontinued. A colorless and transparent polymer (213 g) was obtained.

### Synthesis Example 3 (Synthesis of a reaction product from an organotin and an ester compound)

A 200-ml flask equipped with a stirrer was charged with 24.9 g (0.10 mole) of dibutyltin oxide (trad name StannBO; Sankyo Yuki Gosei) and 39.1 g (0.1 mole) of dioctyl phthalate, and the mixture was stirred in an oil bath maintained at 150°C for 3 hours. Initially, the mixture was a highly viscous white slurry but, as the reaction proceeded, it finally became a pale-yellow, viscous, transparen liquid.

### Comparative Synthesis Example 1

A pressure-resistant glass reaction vessel was charged, after nitrogen substitution, with 420 g of polyoxypropylene glycol having a number average molecular weight of 3,000 and 80 g of polyoxypropylene triol having a number average molecular weight of 3,000. After addition of 40 g of sodium hydroxide, the reaction was carried out at 60°C for 13 hours, then 19 g of bromochloromethane was added and the further reaction was conducted at 60°C for 10 hours. (The polymer thus obtained had an Mw/Mn of 2.1 and a viscosity of 385 poises.)

Then, 15 g of allyl chloride was added and the reaction was conducted for 36 hours. After completion of the reaction, the volatile matter was removed under reduced pressure.

The contents were transferred to a beaker, dissolved in hexane, and subjected to adsorption treatment with aluminum silicate, followed by removal of the hexane under reduced pressure.

A reaction vessel was charged, after nitrogen substitution, with 500 g of said polymer, then 0.03 g of a chloroplatinic acid catalyst solution (prepared by dissolving 25 g of H₂PtCl₆·6H₂O in 500 g of isopropyl alcohol) was added, thereafter 12 g of dimethoxymethylsilane was added, and the reaction was carried out at 80°C for 4 hours. After completion of the reaction, the volatile matter was removed under reduced pressure, whereupon 550 g of a pale-yellow, transparent polymer was obtained.

The viscosity of each of the polymers obtained in Synthesis Examples 1 and 2 and Comparative Synthesis Example 1 was determined at 23°C using a type B viscometer (BM type rotar No. 4, 12 rpm). Each polymer was also analyzed for number average molecular weight (Mn) and molecular weight distribution [Mw/Mn) by GPC. The GPC was performed at an oven temperature of 40°C using a column packed with a polystyrene gel (Tosoh Corporation) and tetrahydrofuran as the eluent. The results are shown in Table 1.

**Table 1**

| Polymer | Viscosity (poises) | Number average molecular weight (Mn) | Molecular weight distribution (Mw/Mn) |
|---|---|---|---|
| Synthesis Example 1 | 88 | 1.8 x 10⁴ | 1.5 |
| Synthesis Example 2 | 150 | 1.7 x 10⁴ | 1.4 |
| Comparative Synthesis Example 1 | 380 | 1.8 x 10⁴ | 2.3 |

### Examples 1 to 3

To 100 parts of the polymer obtained in Synthesis Example 1 was added 1.3 parts, 2 parts or 4 parts (corresponding to Example 1, 2 or 3, respectively) of the curing catalyst obtained in Synthesis Example 3. The resultant mixture was uniformly kneaded. For investigating the rate of curing of each composition obtained, the tack-free time was measured according to JIS A 5758. The tack-free time was 43 minutes, 14 minutes or 7 minutes, respectively.

### Comparative Examples 1 to 3

The polymer obtained in Comparative Synthesis Example 1 was used in lieu of the polymer obtained in Synthesis Example 1, and the tack-free time was determined in the same manner as in Examples 1 to 3. The tack-free time was 50 minutes, 25 minutes or 17 minutes, respectively.

### Example 4

The polymer obtained in Synthesis Example 2 was used in lieu of the polymer obtained in Synthesis Example 1, and the tack-free time was determined in the same manner as in Examples 1 to 3, whereby results approximately the same as those obtained in Examples 1 to 3 were obtained.

### INDUSTRIAL APPLICABILITY

The composition of the invention is superior in rate of curing as compared with composition in which a polymer showing a broad molecular weight distribution is used as component (A).

The reactive silicon group-containing oxypropylene polymer to be used as component (A) in the curable composition of the invention has a narrow molecular weight distribution despite of its high number average molecular weight. Therefore, before curing, the composition of the invention is lower in viscosity and easier to handle than compositions containing the conventional reactive silicon group-containing oxypropylene polymers having the same molecular weight but showing a broader molecular weight distribution.

The low viscosity before curing as mentioned above not only improves the processability but also enables incorporation of a large amount of filler to give an excellent room temperature curable composition.

Furthermore, the composition has unexpectedly very much improved weather resistance, chemical resistance, inclusive of acid resistance, and is superior in water resistance as well.

The curable composition of the invention is particularly useful as an elastic sealant and can be used as a sealant for buildings, ships, automobiles, roads, and so forth. Furthermore, said composition, either as such or with the aid of a primer, can closely adhere to a wide variety of substances, such as glass, ceramics, wood, metals and resin moldings and therefore can be used as various types of sealing composition or adhesive composition. Furthermore, it is useful also as a food packaging material, a rubber material for casting, a material for templating or a paint.

## Claims

1. A curable composition which comprises:
(A) an oxypropylene polymer which contains, in its main polymer chain, a repeating unit of the formula 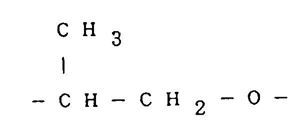 and which has at least one silicon atom-containing group with a hydroxyl group or a hydrolyzable group being bound to the silicon atom and has an Mw/Mn ratio of not more than 1.6 and a number average molecular weight of not less than 6,000, and
(B) 0.01 to 10 parts by weight, per 100 parts by weight of the oxypropylene polymer (A), of a reaction product derived from an organotin of the formula
R⁵R⁶SnO
wherein R⁵ and R⁶ each is a monovalent hydrocarbon group, and an ester compound.

2. A curable composition as claimed in Claim 1, wherein the component (A) polymer has an Mw/Mn ratio of not more than 1.5.

3. A curable composition as claimed in Claim 1 or 2, wherein the component (A) polymer has a number average molecular weight of 6,000 to 30,000.

4. A curable composition as claimed in any of Claims 1 to 3, wherein the silicon atom-containing group occurs at the terminal of the molecular chain.

## Patentansprüche

1. Härtbare Zusammensetzung, die enthält:
(A) ein Oxypropylenpolymer, das in seiner Hauptkette eine wiederkehrende Einheit der Formel 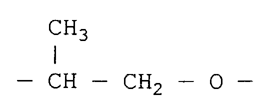 enthält, das mindestens eine ein Siliciumatom enthaltende Gruppe mit, an das Siliciumatom gebunden, einer Hydroxylgruppe oder einer hydrolysierbaren Gruppe enthält und ein Mw/Mn-Verhältnis von nicht mehr als 1,6 und ein Zahlenmittel des Molekulargewichts von nicht weniger als 6.000 aufweist, und
(B) 0,01 bis 10 Gew.-Teile, bezogen auf 100 Gew.-Teile des Oxypropylenpolymers (A), eines aus einem Organozinn der Formel R⁵R⁶SnO, worin R⁵ und R⁶ jeweils eine einwertige Kohlenwasserstoffgruppe sind, und einer Esterverbindung abgeleiteten Reaktionsprodukts.

2. Härtbare Zusammensetzung gemäß Anspruch 1, worin die Polymer-Komponente (A) ein Mw/Mn-Verhältnis von nicht mehr als 1,5 aufweist.

3. Härtbare Zusammensetzung gemäß Anspruch 1 oder 2, worin die Polymer-Komponente (A) ein Zahlenmittel des Molekulargewichts von 6.000 bis 30.000 aufweist.

4. Härtbare Zusammensetzung gemäß einem der Ansprüche 1 bis 3, worin die Siliciumatom-enthaltende Gruppe sich am Ende der molekularen Kette befindet.

## Revendications

1. Composition durcissable, qui comprend :
(A) un polymère d'oxypropylène qui contient, dans sa chaîne polymère principale, une unité répétitive de formule 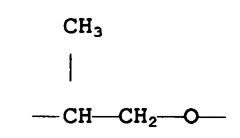 et qui comporte au moins un groupe contenant au moins un atome de silicium, avec un groupe hydroxyle ou un groupe hydrolysable lié à l'atome de silicium, et a un rapport Mw/Mn non supérieur à 1,6 et un poids moléculaire moyen en nombre non inférieur à 6 000, et
(B) 0,01 à 10 parties en poids, pour 100 parties en poids du polymère d'oxypropylène (A), d'un produit de réaction obtenu à partir d'un organoétain de formule
R⁵R⁶SnO
où R⁵ et R⁶ sont chacun un groupe hydrocarboné monovalent, et d'un composé ester.

2. Composition durcissable selon la revendication 1, dans laquelle le polymère du constituant (A) a un rapport Mw/Mn non supérieur à 1,5.

3. Composition durcissable selon la revendication 1 ou 2, dans laquelle le polymère du constituant (A) a un poids moléculaire moyen en nombre de 6 000 à 30 000.

4. Composition durcissable selon l'une quelconque des revendications 1 à 3, dans laquelle le groupe contenant au moins un atome de silicium se trouve à l'extrémité de la chaîne moléculaire.
